(19) **Europäisches Patentamt**
**European Patent Office**
**Office européen des brevets**

(11) **EP 4 354 987 A1**

(12) **EUROPEAN PATENT APPLICATION**
published in accordance with Art. 153(4) EPC

(43) Date of publication:
**17.04.2024 Bulletin 2024/16**

(21) Application number: **22819638.2**

(22) Date of filing: **10.06.2022**

(51) International Patent Classification (IPC):
**H04W 72/00** *(2009.01)* **H04W 72/02** *(2009.01)*
**H04W 74/00** *(2009.01)*

(52) Cooperative Patent Classification (CPC):
**H04B 17/327; H04B 17/382; H04W 72/00;**
**H04W 72/02; H04W 74/00; H04W 74/08**

(86) International application number:
**PCT/CN2022/098078**

(87) International publication number:
**WO 2022/258041 (15.12.2022 Gazette 2022/50)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **11.06.2021 CN 202110653349**

(71) Applicants:
• **CHINA MOBILE COMMUNICATION CO., LTD.**
**RESEARCH INSTITUTE**
**Beijing 100053 (CN)**
• **CHINA MOBILE COMMUNICATIONS GROUP CO.,**
**LTD.**
**Beijing 100032 (CN)**

(72) Inventors:
• **HU, Lijie**
**Beijing 100032 (CN)**
• **LIU, Liang**
**Beijing 100032 (CN)**
• **YANG, Tuo**
**Beijing 100032 (CN)**
• **XIE, Fang**
**Beijing 100032 (CN)**
• **ZHANG, Xiaoran**
**Beijing 100032 (CN)**
• **HU, Nan**
**Beijing 100032 (CN)**

(74) Representative: **Maiwald GmbH**
**Elisenhof**
**Elisenstraße 3**
**80335 München (DE)**

(54) **RESOURCE INDICATION METHOD, DATA TRANSMISSION METHOD, NETWORK SIDE DEVICE AND TERMINAL DEVICE**

(57) The present disclosure belongs to the technical field of communications. Provided are a resource indication method, a data transmission method, a network side device and a terminal device. The resource indication method comprises: sending first indication information, wherein the first indication information is used for indicating a transmission resource list or a carrier list, a transmission resource in the transmission resource list being composed of a single carrier, which has an uplink/downlink transmission capability, or being composed of a combination of carriers, which have an uplink transmission capability and a downlink transmission capability, and the carriers in the carrier list can constitute transmission resources independently or in a combined manner; and sending second indication information, wherein the second indication information is used for indicating a signal quality threshold corresponding to the transmission resource in the transmission resource list, or the second indication information is used for indicating a signal quality threshold corresponding to a first carrier, which has an uplink transmission capability, in the carrier list.

FIG. 1

**Description**

**CROSS-REFERENCE TO RELATED APPLICATIONS**

The disclosure claims priority to Chinese patent application No. 202110653349.5, filed on June 11, 2021, the entire contents of which are incorporated herein by reference.

**TECHNICAL FIELD**

The present disclosure relates to a field of communications technologies, and particularly to a resource indication method, a data transmission method, a network side device and a terminal device.

**BACKGROUND**

In the related art, carrier aggregation is supported in both the long term evolution (LTE) and the new radio (NR) to increase peak throughput of a user equipment (UE). In a carrier aggregation process, more than one carrier is configured for the UE via a radio resource control (RRC) signaling. A deactivated carrier is activated via a medium access control-control element (MAC-CE), and the UE performs transmission on the activated carrier, to improve the throughput.

In a random access phase, although a supplementary uplink carrier is introduced, there is only one supplementary uplink carrier, which greatly limits flexibility of uplink access resource configuration.

**SUMMARY**

The present disclosure provides a resource indication method, a data transmission method, a network side device, and a terminal device, which can enable a terminal device to select a suitable random access resource from more than one available transmission resource, so as to improve flexibility of a random access procedure.

In order to solve the above technical problem, the present disclosure is implemented as follows.

According to a first aspect the present disclosure, a resource indication method is provided. The resource indication method is applied to a network side device, and includes:

sending first indication information, in which the first indication information is used to indicate a transmission resource list or a carrier list, each of one or more transmission resources in the transmission resource list is a single carrier having a capability of an uplink transmission and a capability of a downlink transmission, or is a carrier combination consisting of a carrier having the capability of the uplink transmission and a carrier having the capability of the downlink transmission; and one carrier in the carrier list constitute a transmission resource independently or more than one carrier in the carrier list constitutes a transmission resource; and

sending second indication information, in which the second indication information is used to indicate a signal quality threshold corresponding to the transmission resource in the transmission resource list, or the second indication information is used to indicate a signal quality threshold corresponding to a first carrier having the capability of the uplink transmission in the carrier list.

According to a second aspect of the present disclosure, a data transmission method is provided, and is applied to a terminal device. The method includes:

receiving first indication information, in which the first indication information is used to indicate a transmission resource list or a carrier list, each of one or more transmission resources in the transmission resource list is a single carrier having a capability of an uplink transmission and a capability of a downlink transmission, or is a carrier combination consisting of a carrier having the capability of the uplink transmission and a carrier having the capability of the downlink transmission; and one carrier in the carrier list constitutes a transmission resource independently or more than one carrier in the carrier list constitutes a transmission resource;

receiving second indication information, in which the second indication information is used to indicate a signal quality threshold corresponding to the transmission resource in the transmission resource list, or the second indication information is used to indicate a signal quality threshold corresponding to a first carrier having the capability of the uplink transmission in the carrier list; and

selecting a target transmission resource from one or more transmission resources based on the signal quality threshold, for a random access related data transmission.

According to a third aspect of the present disclosure, a network side device is provided, and includes:

a first sending module, configured to send first indication information, in which the first indication information is used to indicate a transmission resource list or a carrier list, each of one or more transmission resources in the transmission resource list is a single carrier having a capability of an uplink transmission and a capability of a downlink transmission, or is a carrier combination consisting of a carrier having the capability of the uplink transmission and a carrier having the capability of the downlink transmission; and one carrier in the carrier list constitutes a transmission resource independently or more than one carrier in the carrier list constitutes a transmission resource; and

a second sending module, configured to send second indication information, in which the second indication information is used to indicate a signal quality threshold corresponding to the transmission resource in the transmission resource list, or the second indication information is used to indicate a signal quality threshold corresponding to a first carrier having the capability of the uplink transmission in the carrier list.

According to a fourth aspect of the present disclosure, a terminal device is provided, and includes:

a first receiving module, configured to receive first indication information, in which the first indication information is used to indicate a transmission resource list or a carrier list, each of one or more transmission resources in the transmission resource list is a single carrier having a capability of an uplink transmission and a capability of a downlink transmission, or is a carrier combination consisting of a carrier having the capability of the uplink transmission and a carrier having the capability of the downlink transmission; and one carrier in the carrier list constitutes a transmission resource independently or more than one carrier in the carrier list constitutes a transmission resource;

a second receiving module, configured to receive second indication information, in which the second indication information is used to indicate a signal quality threshold corresponding to the transmission resource in the transmission resource list, or the second indication information is used to indicate a signal quality threshold corresponding to a first carrier having the capability of the uplink transmission in the carrier list; and

a random access module, configured to select a target transmission resource from one or more transmission resources based on the signal quality threshold, for a random access related data transmission.

According to a fifth aspect of the present disclosure, a network side device is provided, including: a processor and a transceiver.

The transceiver is configured to send first indication information, in which the first indication information is used to indicate a transmission resource list or a carrier list, each of one or more transmission resources in the transmission resource list is a single carrier having a capability of an uplink transmission and a capability of a downlink transmission, or is a carrier combination consisting of a carrier having the capability of the uplink transmission and a carrier having the capability of the downlink transmission; and one carrier in the carrier list constitutes a transmission resource independently or more than one carrier in the carrier list constitutes a transmission resource; and

the transceiver is further configured to send second indication information, in which the second indication information is used to indicate a signal quality threshold corresponding to the transmission resource in the transmission resource list, or the second indication information is used to indicate a signal quality threshold corresponding to a first carrier having the capability of the uplink transmission in the carrier list.

According to a sixth aspect of the present disclosure, a terminal device is provided, including: a processor and a transceiver.

The transceiver is configured to receive first indication information, in which the first indication information is used to indicate a transmission resource list or a carrier list, each of one or more transmission resources in the transmission resource list is a single carrier having a capability of an uplink transmission and a capability of a downlink transmission, or is a carrier combination consisting of a carrier having the capability of the uplink transmission and a carrier having the capability of the downlink transmission; and one carrier in the carrier list constitutes a transmission resource independently or more than one carrier in the carrier list constitutes a transmission resource;

the transceiver is further configured to receive second indication information, in which the second indication information is used to indicate a signal quality threshold corresponding to the transmission resource in the transmission resource list, or the second indication information is used to indicate a signal quality threshold corresponding to a first carrier having the capability of the uplink transmission in the carrier list; and

the processor is configured to select a target transmission resource from one or more transmission resources based on the signal quality threshold, for a random access related data transmission.

According to a seventh aspect of the present disclosure, a network side device is provided, including a processor, a memory, and a computer program stored on the memory and executable on the processor. When the computer program is executed by the processor, the steps of the resource indication method as described in the first aspect are implemented.

According to an eighth aspect of the present disclosure, a terminal device is provided, including a processor, a memory, and a computer program stored on the memory and executable on the processor. When the computer program is executed by the processor, the steps of the data transmission method as described in the second aspect are implemented.

According to a ninth aspect of the present disclosure, a computer readable storage medium with a computer program stored thereon is provided. When the computer program is executed by a processor, steps of the resource indication method described in the first aspect are implemented, or steps of the data transmission method described in the second aspect are implemented.

In embodiments of the present disclosure, the transmission resource list or the carrier list is indicated via the first indication information, and the signal quality threshold corresponding to the transmission resource in the transmission resource list is indicated via the second indication information, or the signal quality threshold corresponding to the first carrier having the capability of the uplink transmission in the carrier list is indicated via the second indication information. In this way, the terminal device can select the target resource from the transmission resource list or select one or more carriers constituting the target resource from the carrier list according to the second indication information in an initial access stage, so that the terminal device can perform selection in more than one carrier when initiating a random access, therefore improving flexibility of the random access procedure.

## BRIEF DESCRIPTION OF THE DRAWINGS

FIG. 1 is a flow diagram of a resource indication method according to an embodiment of the present disclosure.
FIG. 2a is a first schematic diagram of a correspondence between transmission resources and signal quality thresholds according to an embodiment of the present disclosure.
FIG. 2b is a second schematic diagram of a correspondence between transmission resources and signal quality thresholds according to an embodiment of the present disclosure.
FIG. 3 is a schematic diagram of co-sited carriers and non-co-sited carriers according to an embodiment of the present disclosure.
FIG. 4 is a flowchart of a data transmission method according to an embodiment of the present disclosure.
FIG. 5 is a block diagram of a network side device according to an embodiment of the present disclosure.
FIG. 6 is a block diagram of a terminal device according to an embodiment of the present disclosure.
FIG. 7 is a block diagram of a network side device according to another embodiment of the present disclosure.
FIG. 8 is a block diagram of a terminal device according to another embodiment of the present disclosure.

## DETAILED DESCRIPTION

In order to make technical problems to be solved, technical solutions and advantages of the present disclosure clearer, the following describes in detail with reference to accompanying drawings and specific embodiments. In the following description, specific details, such as specific configurations and components, are provided merely to help fully understand the embodiments of the present disclosure. Therefore, those skilled in the art should aware that various changes and modifications may be made to the embodiments described herein without departing from the scope and spirit of the present disclosure. In addition, for the sake of clarity and conciseness, descriptions of well-known functions and configurations are omitted.

It should be understood that "an embodiment" or "one embodiment" mentioned throughout the specification means that a particular feature, structure, or characteristic related to an embodiment is included in at least one embodiment of the present disclosure. Therefore, "in an embodiment" or "in one embodiment" appearing throughout the specification does not necessarily refer to a same embodiment. Furthermore, these particular features, structures, or characteristics may be combined in any suitable manner in one or more embodiments.

In various embodiments of the present disclosure, it should be understood that the magnitude of serial numbers of processes below does not imply a sequential order of execution, and that the order of execution of the processes should be determined by their functions and inherent logics without constituting any limitation on the implementation processes of the embodiments of the present disclosure.

In an existing NR technology, in order to improve uplink coverage in a random access procedure, a supplementary uplink (SUL) carrier is introduced. The SUL is broadcast in a system information block 1 (SIB 1), and a threshold value for using the SUL is configured in a random access channel (RACH) configuration for the SUL, the threshold value is indicated by rsrp-ThresholdSSB-SUL, i.e., a reference signal received power (RSRP) threshold of a synchronization signal/physical broadcast channel signal block (also called synchronization signal and PBCH block (SSB)). The threshold value for using the SUL is configured to enable the terminal device to select an SUL carrier to initiate a random access procedure when a downlink path loss reference RSRP is less than rsrp-ThresholdSSB-SUL, and enable the terminal device to select a normal uplink (NUL) carrier to initiate the random access procedure when the downlink path loss reference RSRP is greater than or equal to rsrp-ThresholdSSB-SUL. However, a number of the SUL carriers configured in the related art is limited to one. After the terminal device enters a connected state, only one of the SUL and the NUL can be selected for an uplink transmission.

It can be seen from above that multi-carrier is not used throughout an idle state and a connected state of the terminal device in the related art. Before accessing, the terminal device can only see one time division duplex (TDD) and one SUL carrier, or only see one frequency division duplex (FDD) carrier and one SUL carrier.

Different from related methods in the related art, in the embodiments of the present disclosure, the terminal device may be allowed to perform selection in more than one carrier at an initial access stage, so as to improve flexibility of the random access procedure.

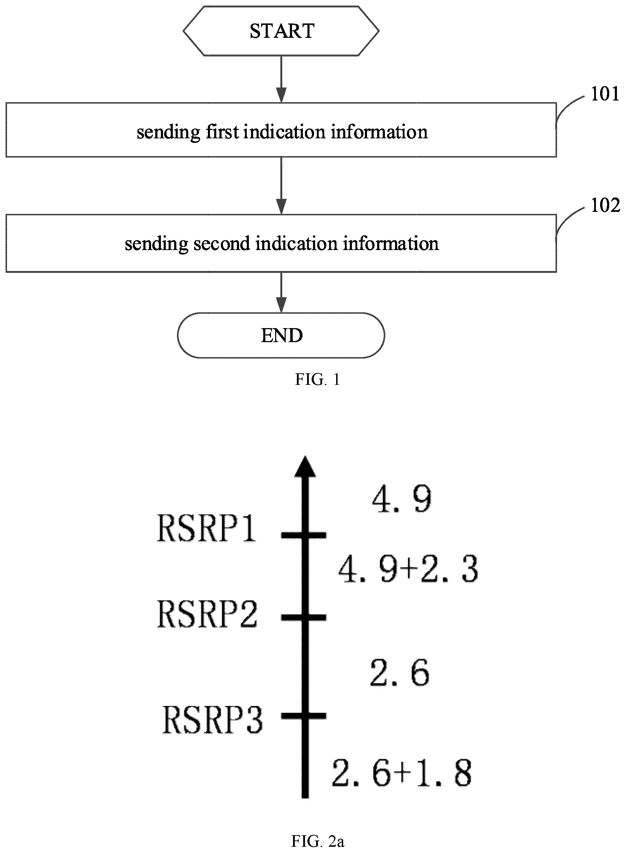

Referring to FIG. 1, a resource indication method is provided in a specific embodiment of the present disclosure, and an execution subject may be a network side device. As shown in FIG. 1, the resource indication method may include the following steps.

At step 101, first indication information is sent, the first indication information is used to indicate a transmission resource list or a carrier list, each of one or more transmission resources in the transmission resource list is a single carrier having a capability of an uplink transmission and a capability of a downlink transmission, or is a carrier combination consisting of a carrier having the capability of the uplink transmission and a carrier having the capability of the downlink transmission; and one carrier in the carrier list constitutes a transmission resource independently or more than one carrier in the carrier list constitutes a transmission resource.

In a specific implementation, the one or more carriers constituting the transmission resource may include one or more of carriers such as TDD carriers, FDD carriers, SUL carriers, and a supplementary downlink (SDL) carriers. In other words, in the related art, before accessing, the terminal device can only see one TDD and one SUL carrier, or can only see one FDD and one SUL carrier. In the embodiments of the present disclosure, multiple carriers to be selected by the terminal device are not limited to the SUL carriers, and may include one or more carriers such as the TDD carriers, the FDD carrier, the SUL carriers, the SDL carriers and the like, as long as these carrier resources are available currently. Available random access resources are fully utilized, and the flexibility of random access resource selection is improved, so that a success rate of the random access and coverage of the random access can be improved.

In another aspect, a variety of alternative carriers are provided for the terminal device, which improves a utilization rate of available transmission resources.

Further, in a case that the first indication information is used to indicate the transmission resource list, a transmission resource in the transmission resource list may be composed of one or more carriers of the TDD carriers, the FDD carriers, the TDD + SUL carriers, the FDD + SUL carriers. For example, it is assumed that there are four available carriers, which are: a TDD carrier (2.6 GHz), a TDD carrier (4.9 GHz), an SUL carrier (1.8 GHz), and an SUL carrier (2.3 GHz). In this case, it can be found that the 2.6 GHz TDD carrier may be combined with the1.8 GHz SUL carrier to constitute a transmission resource, and the 4.9 GHz TDD carrier may be combined with the SUL carrier of 2.3 GHz to constitute another transmission resource. The 2.6 GHz TDD carrier and the 4.9 GHz TDD carrier may respectively serve as an independent transmission resource. The transmission resource list indicated by the first indication information may include four transmission resources, which are [the 2.6 GHz TDD carrier and the 1.8 GHz SUL carrier], [the 2.6 GHz TDD carrier], [the 4.9 GHz TDD carrier and the 2.3 GHz SUL carrier], and [the 4.9 GHz TDD carrier].

It should be understood that in the embodiments of the present disclosure, the transmission resource being the carrier combination consisting of the carrier having the capability of the uplink transmission and the carrier having the capability of the downlink transmission refers to that the transmission resource is composed of multiple carriers, and the transmission resources formed by combining more than one carrier together has an uplink-downlink transmission capability (i.e., both the capability of the uplink transmission and the capability of the downlink transmission), and the transmission resource may be constituted in more than one combined manner, for example.

1. The transmission resource may be constituted by a combination consisting of a carrier A1 having only the capability of the uplink transmission and a carrier B1 having only the capability of downlink transmission.
2. The transmission resource may be constituted by a combination consisting of a carrier A2 having the uplink-downlink transmission capability and a carrier B2 having only the capability of the downlink transmission.
3. The transmission resource may be constituted by a combination consisting of a carrier A3 having the uplink-downlink transmission capability and a carrier B3 having only the capability of the uplink transmission are combined.
4. The transmission resource may be constituted by a combination consisting of carriers A4 and B4 both having the uplink-downlink transmission capability.

At step 102, second indication information is sent, the second indication information is used to indicate a signal quality threshold corresponding to the transmission resource in the transmission resource list, or the second indication information is used to indicate a signal quality threshold corresponding to a first carrier having the capability of the uplink transmission in the carrier list.

In an implementation, the first indication information is used to indicate the transmission resource list, the transmission resource in the transmission resource list is a single carrier having the uplink-downlink transmission capability, or is a carrier combination consisting of a carrier having the capability of the uplink transmission and a carrier having the capability of the downlink transmission. In this case, the second indication information is used to indicate the signal quality threshold corresponding to the transmission resource in the transmission resource list.

The embodiment may be understood as follows. The network side device directly indicates one or more transmission resources, and configures a signal quality threshold corresponding to each transmission resource. In this way, at an initial access stage, the terminal device may select a target transmission resource from the transmission resource list according to a numerical relationship between a signal quality of a received transmission resource and the signal quality threshold corresponding to each transmission resource, and perform a random access related data transmission on the selected target transmission resource.

In another implementation, the first indication information is used to indicate the carrier list, one carrier in the carrier list can constitute the transmission resource independently or more than one carrier in the carrier list can constitute the transmission resource. In this case, the second indication information is used to indicate the signal quality threshold corresponding to the first carrier having the capability of the uplink transmission in the carrier list.

The present embodiment may be understood as follows. The network side device informs the terminal of available carriers and the signal quality threshold corresponding to each available uplink carrier. In this way, at the initial access stage, the terminal device may select a target carrier from all available carriers according to a certain rule, so as to perform the random access related data transmission on the target transmission resource constituted by the selected target carri er.

In an actual application, a carrier constituting the target transmission resource needs to have the capability of the uplink transmission and the capability of the downlink transmission. When the target carrier selected by the terminal device has only the capability of the uplink transmission and does not have the capability of the downlink transmission, the target carrier having the capability of the uplink transmission can be associated with another carrier having the capability of the downlink transmission based on a certain rule, so that the two associated carriers constitute the target transmission resource. Therefore, a purpose that the target transmission resource has both the capability of the uplink transmission and the capability of the downlink transmission is achieved.

In an optional implementation, in a case that the first indication information is used to indicate the carrier list, the first carrier and a second carrier constitute the transmission resource by default. The second carrier is, in the carrier list, a carrier with a lowest frequency among one or more carriers each having a frequency higher than or equal to a frequency of the first carrier and having the capability of the downlink transmission.

In a specific implementation, in the case that the first carrier has both the capability of the uplink transmission and the capability of the downlink transmission, the second carrier and the first carrier may be a same carrier.

For example, when the first carrier itself has the capability of the uplink transmission and the capability of the downlink transmission, the second carrier may be itself. In a case that the first carrier has only the capability of the uplink transmission, the second carrier needs to have the capability of the downlink transmission, and if there are more than one carrier having the capability of the downlink transmission, the second carrier is selected according to a frequency.

In addition, a selection criterion of the second carrier may be configured for the terminal device by the network side device, or the terminal is enabled to learn the selection criterion of the second carrier in a manner of predefining a protocol.

In addition, in the carrier list, the carrier with the lowest frequency among one or more carriers each having the frequency higher than or equal to the frequency of the first carrier and having the capability of the downlink transmission can be understood as that the second carrier is a carrier in the carrier list, that has the capability of the downlink transmission, has a frequency band higher than the frequency band of the first carrier, and has a minimum frequency interval with the first carrier.

In an actual application, when the random access is initiated via the first carrier, subsequent contention-based random access signalings Msg2 and Msg4 are transmitted via the second carri er.

For example, it is assumed that there are four carriers in the carrier list, which are the 2.6 GHz TDD carrier, the 4.9 GHz TDD carrier, the 1.8 GHz SUL carrier, and the 2.3 GHz SUL carrier. In this case, there are four carriers having the capability of the uplink transmission, that is, there are four first carries. When the terminal device determines that an accessed uplink carrier is the 2.3 GHz SUL carrier according to the signal quality threshold indicated by the second indication information, a downlink carrier needs to be combined to receive a message such as Msg4. For this, the 2.3 GHz SUL carrier may be predefined to be associated with its nearest 2.6 GHz TDD carrier, which has the downlink function. In this way, when the terminal device determines that the accessed uplink carrier is the 2.3 GHz SUL carrier according to the signal quality threshold indicated by the second indication information, the terminal device takes the 2.3 GHz SUL carrier and the 2.6 GHz TDD carrier together to form the target transmission resource by default, so as to perform the random access related data transmission on the target transmission resource.

Different from the related art that the SUL carrier is associated with a downlink (DL) carrier receiving a system message by default, so that when the random access is initiated via the SUL, subsequent Msg2 and Msg4 are transmitted via the DL carrier receiving the system message, in the embodiments of the present disclosure, the first carrier may be any one of the more than one carrier in the carrier list, and the second carrier is determined as, in the carrier list, the carrier with the lowest frequency among one or more carriers each having the frequency higher than or equal to the frequency of the first carrier and having the capability of the downlink transmission. A frequency difference between the first carrier and the second carrier in a same transmission resource can be reduced, so as to improve consistency of the transmission resource on the capability of the uplink transmission and the capability of the downlink transmission.

Meanwhile, different from the related art, for example, when a transmission performance of the SUL carrier cannot meet a requirement, the 2.3 GHz SUL carrier or the 4.9 GHz TDD carrier may be further selected to implement a carrier aggregation transmission in the embodiments of the present disclosure.

In addition, the one or more carriers constituting the transmission resource may include an anchor carrier and a non-anchor carrier. In this case, the terminal device may obtain a signal strength of each carrier in the following manner, to determine the target transmission resource based on the numerical relationship between the signal strength and the signal quality threshold.

Considering a co-site deployment, different carriers can be deployed in the co-site way, so that their signal propagation loss difference is relatively fixed. The terminal device may determine the signal strength of the non-anchor carrier based on the signal strength received on the anchor carrier, to select the anchor carrier or the non-anchor carrier for the random access related data transmission based on the selection criterion of the target transmission resource.

It should be noted that, after the terminal device enters a connected state, the transmission resource for data transmission can still be selected according to indications of the first indication information and the second indication information. For ease of description, in the following embodiments, the terminal device selects the transmission resource for performing the random access related data transmission according to the indications of the first indication information and the second indication information at the initial access stage, which is not specifically limited herein.

Further, the first indication information and the second indication information may be sent or broadcast to the terminal device via a system message, a paging message, a network broadcast message, or a control signaling.

In addition, the system message or the paging message may be sent only on the anchor carrier, so as to save system overhead.

The designations of the anchor carrier (or called an anchor frequency resource) and the non-anchor carrier (or called a non-anchor frequency resource) are merely for convenience of description, which are not limited herein. The anchor carrier mainly refers to a carrier for transmitting the system message, which is for the terminal to reside, receive a paging message, and the like. The non-anchor carrier may not be used for the terminal to reside, not send the system message, except for a system message requested by the UE. Both the anchor carrier and the non-anchor carrier may be configured for data transmission in the random access procedure and data transmission in the connected state.

It should be noted that, based on multiple transmission resources or multiple carriers that may be selected by the terminal device, there may be multiple signal quality thresholds corresponding to the transmission resources in the transmission resource list, or multiple signal quality thresholds corresponding to the first carriers having the capability of the uplink transmission in the carrier list.

In an optional implementation, selection criteria corresponding to different transmission resources are different, or selection criteria corresponding to at least two transmission resources are same.

The transmission resource may be the transmission resource in the transmission resource list indicated by the first indication information, or may be the transmission resource formed, according to a protocol specification or a configuration issued by the network side device, by a carrier combination selected from the carrier list.

In addition, the selection criterion is defined by the signal quality threshold in the second indication information. For example, a signal quality range is formed by at least one signal quality threshold, the selection criterion may be understood as that when the signal quality of a downlink transmission is within the signal quality range, a transmission resource corresponding to the signal quality range is selected.

Embodiment 1

Under a condition that the selection criteria corresponding to different transmission resources are different, assuming that a total number of transmission resources is N, then a number of required signal quality thresholds is N-1. N signal quality ranges are divided by the N-1 signal quality thresholds, and the N signal quality ranges are in one-to-one correspondence with the N transmission resources.

For example, as shown in FIG. 2a, it is assumed that the total number of transmission resources is four, which are the 4.9 GHz TDD carrier, the carrier combination of the 4.9 GHz TDD carrier and the 2.3 GHz SUL carrier, the 2.6 GHz TDD carrier, and the carrier combination of the 2.6 GHz TDD carrier and the 1.8 GHz SUL carrier. There are three signal quality thresholds corresponding to the four transmission resources, which are RSRP1, RSRP2, and RSRP3, respectively. The selection criteria of the transmission resource may be that when a downlink RSRP is greater than the RSRP1, it is determined that the target transmission resource is the 4.9 GHz TDD carrier; when the downlink RSRP is greater than the RSRP2 and less than or equal to the RSRP1, it is determined that the target transmission resource is the carrier combination of the 4.9 GHz TDD carrier and the 2.3 GHz SUL carrier; when the downlink RSRP is greater than the RSRP3 and less than or equal to the RSRP 2, it is determined that the target transmission resource is the 2.6 GHz TDD carrier; and when the downlink RSRP is less than or equal to the RSRP3, it is determined that the target transmission resource is the carrier combination of the 2.6 GHz TDD carrier and the 1.8 GHz SUL carrier.

In the embodiment, the terminal device can select the target transmission resource according to only the numerical comparison between the RSRP and the signal quality threshold.

Embodiment 2

If the selection criteria corresponding to the at least two transmission resources are the same, assuming that the total number of transmission resources is N, then the number of the required signal quality thresholds is less than N-1. In this case, a same signal quality range may correspond to the at least two transmission resources.

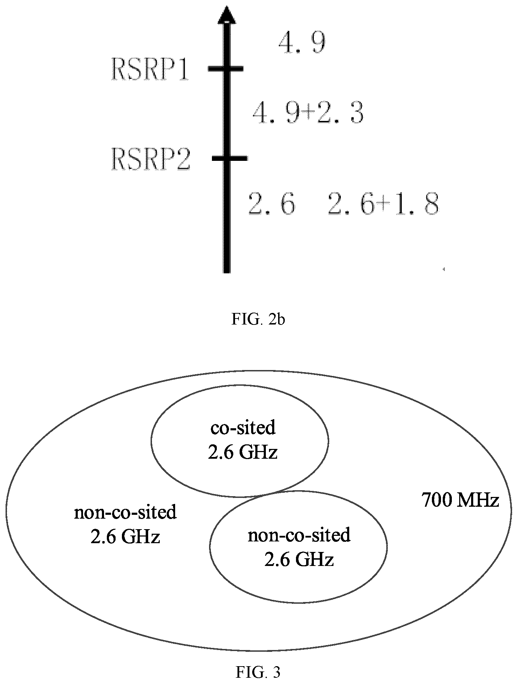

For example, as shown in FIG. 2b, it is assumed that the total number of transmission resources is four, which are the 4.9 GHz TDD carrier, the carrier combination of the 4.9 GHz TDD carrier and the 2.3 GHz SUL carrier, the 2.6 GHz TDD carrier, and the carrier combination of the 2.6 GHz TDD carrier and the 1.8 GHz SUL carrier. There are two signal quality thresholds corresponding to the four transmission resources, which are the RSRP1 and the RSRP2. The selection criteria of the transmission resource may be that when the downlink RSRP is greater than the RSRP1, it is determined that the target transmission resource is the 4.9 GHz TDD carrier; when the downlink RSRP is greater than the RSRP2 and less than or equal to the RSRP1, it is determined that the target transmission resource is the carrier combination of the 4.9 GHz TDD carrier and the 2.3 GHz SUL carrier; and when the downlink RSRP is less than or equal to the RSRP2, it is determined that the target transmission resource is the 2.6 GHz TDD carrier or the carrier combination of the 2.6 GHz TDD carrier and the 1.8 GHz SUL carri er.

In the case that the downlink RSRP is less than or equal to the RSRP2, based on factors such as a service requirement or load balance of different carriers, the terminal device may select the carrier combination of the 2.6 GHz TDD carrier and the 1.8 GHz SUL carrier as the target transmission resource, or select the 2.6 GHz TDD carrier as the target transmission resource. In other words, the signal quality range less than or equal to the RSRP2 corresponds to two transmission resources having the same selection criterion.

The embodiment may be applied to an application scenario in which propagation characteristics of the more than one carrier are close. In this case, the more than one carrier with close propagation characteristics may correspond to the same selection criterion.

Further, in the case that the selection criteria corresponding to the at least two transmission resources are the same, the network side device may further configure for the terminal device as to how to select one of the at least two transmission resources corresponding to the same selection criterion as the target transmission resource.

For example, one of the at least two transmission resources corresponding to the same selection criterion may be selected as the target transmission resource based on at least one of the following criteria.

A first criterion is that the load balance of different carriers in the same cell is ensured.

Generally speaking, a coverage performance of a low-frequency carrier is better than a coverage performance of a high-frequency carrier. If a large number of users are concentrated on the low-frequency carrier, the low-frequency carrier is crowded, and limited resources are preempted for those users really needing the low-frequency carrier to improve coverage due to poor coverage, so that an efficiency of such carrier usage mode is relatively low. From another aspect, a bandwidth of the low-frequency carrier is generally narrow, which is not conducive to providing large-capacity and high-rate transmissions.

In this way, based on the first criterion, in a specific embodiment of the present disclosure, a carrier with a lower load (usually a carrier with a higher frequency) is preferentially selected to perform the random access related data transmission, so that loads on different carriers can be balanced, and a situation that loads of some carriers exceed a standard and the other carriers are relatively free is avoided.

For example, when the first indication information is used to indicate the carrier list, the first carrier and the second carrier constitute the transmission resource by default. The second carrier is, in the carrier list, the carrier with the lowest frequency among one or more carriers each having the frequency higher than or equal to the frequency of the first carrier and having the capability of the downlink transmission.

For setting of the above association relationship, not only the frequency of the carrier is considered, i.e., the carrier with a higher frequency is preferentially selected, but also a frequency interval between the uplink and downlink carriers is considered, i.e., the frequency interval is as small as possible, so as to achieve balance of uplink and downlink.

A second criterion is that quality of service of a service is ensured.

In view of different frequencies suitable for different services, for example, for a voice over new radio (VoNR) service, it is suggested that the terminal device initiating the service accesses on a specific carrier, such as a 700 MHz carrier, to ensure the quality of service. Based on the second criterion, for different services, target transmission resources that are suitable for the services can be selected for the random access related data transmission.

In an optional implementation, in the case that the same selection criterion corresponds to the at least two transmission resources, different priorities are configured for the transmission resources corresponding to the same selection criterion.

In a specific implementation, the priority may be related to a service type.

Corresponding to the second criterion, in different transmission service scenarios, priorities for the at least two transmission resources corresponding to the same selection criterion can be different. For example, the priority of the carrier matching with a current transmission service is higher than the priority of the carrier not matching with the current transmission service. Based on the priority, the terminal device may select one transmission resource matching with the current transmission service from the at least two transmission resources corresponding to the same selection criterion as the target transmission resource. For another example, when the user initiates a voice service, a full-duplex carrier is preferentially used. When the user initiates a low-latency service, the TDD carrier is preferentially used.

In an actual application, the priority may also be related to a load on the carrier, for example, the lower the load is, the higher the priority is. In this way, based on the priority, the terminal device may select a transmission resource with a lower load from the at least two transmission resources corresponding to the same selection criterion as the target transmission resource.

In an optional implementation, before sending the first indication information, the method further includes: configuring one or more carriers in the transmission resource list or the carrier list, in which the uplink-downlink transmission capability of each carrier is determined by the configuring.

Different from the related art that a transmission capability of each carrier is predetermined, for example, the carrier has attributes such as FDD, TDD, SUL, SDL, and therefore, the uplink and downlink transmission capabilities of the carrier has been determined before configuration, in the embodiment, the transmission capability of the carrier can be determined only after the configuration is performed, which is more flexible than the related art. For example, there is an uplink carrier at present, but lacks a downlink carrier. According to an existing method, a redundant carrier may have been configured as a carrier without the capability of the downlink transmission, a transmission may be interrupted due to lack of the downlink transmission. In the inventive method, the carrier may be configured as a carrier with the capability of the downlink transmission according to needs, so that the service can continue, and the flexibility is improved.

In a specific implementation, the configuring includes at least one of the following operations:

configuring a period of a frame structure;
configuring an allocation of an uplink transmission slot of the carrier; or
configuring an allocation of a downlink transmission slot of the carrier.

For example, it is assumed that the period configured for the frame structure of the carrier is 5 ms and a subcarrier spacing is 15 KHz. There are five transmission slots in each period. In this case, the carrier configuration can include the followings.

Case 1

The carrier is configured as a carrier f0.

The allocation of downlink transmission slots of the carrier f0 within the period may be DDDDD, where D represents a downlink transmission slot.

The allocation of uplink transmission slots of the carrier f0 within the period may be UUUUU, where U represents the uplink transmission slot.

Case 2

The carrier is configured as a carrier f1.

The allocation of the downlink transmission slots of the carrier f1 within the period may be DDDXX, where X represents unavailable.

The allocation of the uplink transmission slots of the carrier f1 within the period may be XXXUU.

Case 3

The carrier is configured as a carrier f2.
The allocation of the downlink transmission slots of the carrier f2 within the period may be DDDDD.
The allocation of the uplink transmission slots of the carrier f2 within the period may be XXXXX.

Case 4

The carrier is configured a carrier f3.
The allocation of the downlink transmission slots of the carrier f3 within the period may be XXXXX.
The allocation of the uplink transmission slots of the carrier f3 within the period may be UUUUU.
It should be noted that foregoing carrier configuration cases 1 to 4 are merely examples. In an actual application, the allocation of the uplink transmission slot and the allocation of the downlink transmission slot may be varied, which are not exhaustive herein.
In the embodiment, flexible configuration of the carrier such as the full-duplex carrier, the FDD carrier, the TDD carrier, the SUL carrier, and the SDL carrier may be implemented by the carrier configuration described above. For example, f0 may be considered as a full-duplex frequency configuration due to an uplink and a downlink are both performed in a same frequency. In a frequency of f1, time division duplexing is used for the uplink and downlink, which can realize a configuration of TDD. f2 is considered as a configuration of SDL. f3 is considered as a configuration of SUL. A configuration of FDD can be implemented if f2 and f3 are combined.
It should be noted that the carrier configuration in the above embodiments may be used as a carrier list configuration mode. The carrier list configuration mode may be used independently from other indication information.
In an optional implementation, the resource indication method further includes:
sending third indication information, in which the third indication information is used to indicate a correspondence between SSB indexes of the carriers in the transmission resource list.
In a specific implementation, the third indication information is used to indicate the correspondence between the SSB indexes of the carriers in the transmission resource list. It can be understood that the third indication information is used to indicate the correspondence between the SSB indexes of the anchor carrier and the non-anchor carrier in the transmission resource list.
In the related art, the SUL and the NUL correspond to a same downlink frequency point. Therefore, after the terminal device obtains a strongest downlink beam by a downlink SSB measurement, regardless of whether to select the NUL or the SUL to perform uplink random access, only a physical random access channel (PRACH) resource needs to be determined according to the SSB index. Different from the related art, in the embodiment of the present disclosure, since an uplink PRACH resource is obtained according to the downlink SSB index thereof, the correspondence between the SSB beam of the anchor carrier and the beam of the non-anchor carrier needs to be known.
In addition, in view of the fact that a number of SSB beams of different frequency bands may be different, for example, a 1.8 GHz carrier has only 4 beams at most, and a 2.6 GHz carrier may have 8 beams. In this case, if the two frequency point carriers are respectively sent according to respective maximum beams, a correspondence between a beam of the anchor carrier and a beam of the non-anchor carrier needs to be indicated. In the embodiment, the third indication information indicates the correspondence between the SSB indexes of different frequencies, so that the terminal device can be assisted to reduce measurement when performing a carrier selection.
For example, it is assumed that a beam 1 and a beam 2 of the anchor carrier correspond to a beam 1 of the non-anchor carrier, and the terminal device determines based on the RSRP that the terminal device currently accesses via the non-anchor carrier. In this case, if strongest beams of the anchor carrier are the beam 1 or the beam 2, the PRACH resource corresponding to the beam 1 of the non-anchor carrier is selected for access.
For another example, it is assumed that the beam 1 of the anchor carrier corresponds to beams 1, 2, 3 and 4 of the non-anchor carrier, and the terminal device determines based on the RSRP that the terminal device currently accesses via the non-anchor carrier. In this case, if the strongest beam of the anchor carrier is the beam 1, the terminal device can determine the beams 1, 2, 3 and 4 of the non-anchor carrier corresponding to the beam 1 of the anchor carrier based on the third indication information. The terminal device measures SSB positions of the beams 1, 2, 3 and 4 of the non-anchor carrier to determine a beam with the highest signal strength, so that the terminal device can perform the random access via the PRACH resource corresponding to the beam with the highest signal strength.
It can be seen from the above that in the implementation, the strongest beam of the anchor carrier and parameters such as the signal quality can be determined based on measurement of the anchor carrier and the broadcast system message. Based on the correspondence between the strongest beam and the beam of the non-anchor carrier, a judgment basis for selecting the non-anchor carrier is provided. In this way, the terminal device is prevented from measuring the signal quality for some unnecessary non-anchor carriers, therefore saving power consumption of the terminal device and simplifying a calculation process of the terminal device.

In an optional implementation, the resource indication method further includes:
sending fourth indication information, in which the fourth indication information is used to indicate cell ID information of a carrier in the transmission resource list or the carrier list.

In a specific implementation, the cell ID information may be understood as a physical cell ID (physical layer cell identity).

In an actual application, in the case that the coverage of the anchor carrier and the coverage of the non-anchor carrier are greatly different, the carriers in the transmission resource list or the carrier list may include a non-co-sited carrier in addition to a co-sited carrier.

In the embodiment, the cell ID information of the carrier is indicated by the fourth indication information, so that based on the received fourth indication information, the terminal device determines which carriers are co-sited carriers, and which carriers are non-co-sited carriers, so as to select one or more co-sited carriers to constitute the transmission resource.

On this basis, the network side device may further configure different carrier configurations for different physical cells. For example, different carrier configurations may be configured for different physical cells of a same non-anchor frequency point co-covered with the anchor carrier. For example, only the co-sited non-anchor frequency point has the configuration of the SUL, and other non-co-sited non-anchor frequency points cannot use the configuration of the SUL.

For example, as shown in FIG. 3, it is assumed that 700 MHz is an anchor carrier frequency point, 2.6 GHz is a non-anchor carrier frequency point, and one SUL frequency band is further configured. There are three 2.6 GHz non-anchor carriers exist in coverage of 700 MHz, and the three 2.6 GHz non-anchor carriers use different physical cell IDs respectively. If it is determined that only one non-anchor carrier is co-sited with the 700 MHz anchor carrier based on the physical cell ID, during configuration, the network side device may configure the SUL and the signal quality threshold of the RSRP thereof for a co-sited 2.6 GHz non-anchor carrier, and only configures related configuration information of 2.6 GHz non-anchor carrier but does not configure SUL related information for the non-co-sited 2.6 GHz non-anchor carrier, so that the non-co-sited 2.6 GHz non-anchor carrier is not selected as the SUL. Correspondingly, at the terminal device, after the UE accesses via the anchor carrier and obtains the broadcast information, a receiving position of the SSB of the non-anchor carrier may be obtained according to the broadcast information, so that the physical cell ID is obtained by detecting the corresponding position. Whether the non-anchor carrier belongs to the co-sited non-anchor carrier is determined according to the physical cell ID.

The implementation is especially suitable for the case where the first indication information is used to indicate the carrier list. For the case that the first indication information is used to indicate the transmission resource list, the network side device may directly contain only the transmission resources composed of the co-sited carriers in the transmission resource list, which is not set forth herein.

In a specific implementation, the fourth indication information is used to indicate the cell ID information of the carriers in the transmission resource list or the carrier list. It can be understood that the fourth indication information is used to indicate the physical cell ID of the non-anchor carrier in the transmission resource list or the carrier list.

In addition, in the case that coverage scenarios are similar, a traditional terminal device may access via the non-anchor carrier. Therefore, the non-anchor carrier also has its own system message and physical cell ID. The physical cell ID is configured for operations such as physical broadcast channel (PBCH) scrambling, control resource set (CORESET) interleaving, physical downlink control channel (PDCCH) scrambling, physical downlink shared channel (PDSCH) scrambling, demodulation reference signal (DMRS) scrambling, etc. without configuring dedicated parameters.

Taking the CORESET interleaving as an example, when a mapping mode of mapping an interleaved control channel element (CCE) to a resource element group (REG) is adopted, the following formula is satisfied:

in the case of $N_{\text{symb}}^{\text{CORESET}} = 1,\ L \in \{2,6\}$;

in the case of $N_{\text{symb}}^{\text{CORESET}} \in \{2,3\},\ L \in \left\{N_{\text{symb}}^{\text{CORESET}}, 6\right\}$;

where, $L$ represents an REG binding size; $N_{\text{symb}}^{\text{CORESET}}$ represents a number of orthogonal frequency division multiplexing (OFDM) symbols occupied by a CORESET signaling.

And an interleaver may be defined by the following formula:

$$f(x) = (rC + c + n_{\text{shift}})\ \text{mod}\ \left(N_{\text{REG}}^{\text{CORESET}}/L\right)$$

$$x = cR + r$$

$$r = 0,1, \dots, R - 1$$

$$c = 0,1, \dots, C - 1$$

$$C = N_{\mathrm{REG}}^{\mathrm{CORESET}}/(LR)$$

where, $n_{\mathbf{shift}} \in \{0,1, \dots ,274\}$, and in the case that a higher-layer parameter shiftIndex is provided, a specific value of $n_{\mathbf{shift}}$ is obtained based on the higher-layer parameter shiftIndex, otherwise $n_{\mathrm{shift}} = N_{\mathrm{ID}}^{\mathrm{cell}}$ ; for a CORESET which has an index value 0, $n_{\mathrm{shift}} = N_{\mathrm{ID}}^{\mathrm{cell}}$. $N_{\mathrm{ID}}^{\mathrm{cell}}$ represents a physical cell ID (physical layer cell identity); $R$ represents a total number of rows of the interleaver; r represents a row index of the interleaver; C represents a total number of columns of the interleaver; x represents a column index of the interleaver; $n_{\mathbf{shift}}$ represents an offset value; mod represents a remainder function; $N_{\mathrm{REG}}^{\mathrm{CORESET}}$ represents a total number of REGs in a CORESET signaling; and LR represents a number of the REGs contained in each row in the interleaver.

It can be seen from above that the base station still scrambles and interleaves the non-anchor carriers serving the traditional terminal device in a traditional way. The physical cell ID needs to be used. Therefore, the physical cell ID and corresponding configuration information of the non-anchor carrier are indicated to the terminal device via the fourth indication information. In this way, when a new terminal device directly accesses the non-anchor carrier via the anchor carrier, the terminal device does not need to receive its SSB, and can obtain the physical cell ID, so as to be able to perform a subsequent normal data transmission.

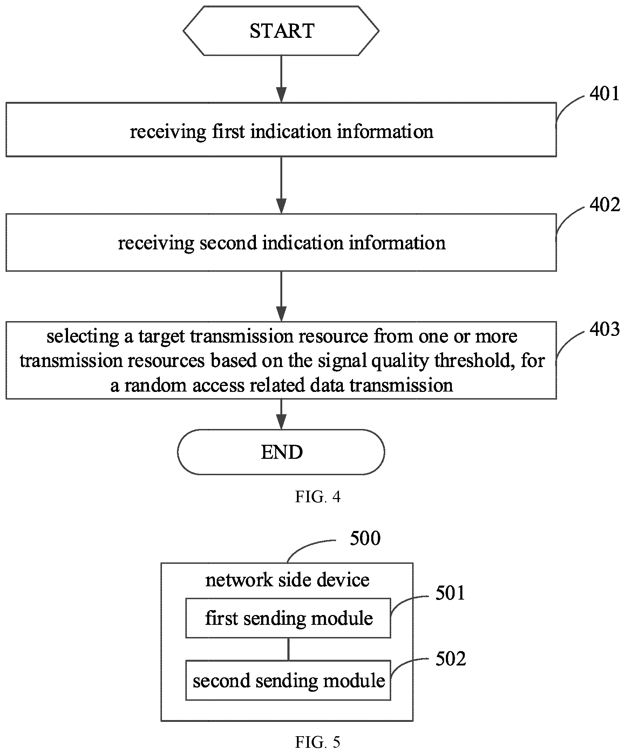

In addition, for a terminal device, an embodiment of the present disclosure further includes a data transmission method, and an execution subject of the data transmission method may be the terminal device, as shown in FIG. 4, the data transmission method includes the following steps.

At step 401, first indication information is received, the first indication information is used to indicate a transmission resource list or a carrier list, each of one or more transmission resources in the transmission resource list is a single carrier having a capability of an uplink transmission and a capability of a downlink transmission, or is a carrier combination consisting of a carrier having the capability of the uplink transmission and a carrier having the capability of the downlink transmission; and one carrier in the carrier list constitutes a transmission resource independently or more than one carrier in the carrier list constitutes a transmission resource.

At step 402, second indication information is received, the second indication information is used to indicate a signal quality threshold corresponding to the transmission resource in the transmission resource list, or the second indication information is used to indicate a signal quality threshold corresponding to a first carrier having the capability of the uplink transmission in the carrier list.

At step 403, a target transmission resource is selected from the one or more transmission resources based on the signal quality threshold, for a random access related data transmission.

In a specific implementation, the one or more transmission resources in step 403 includes the one or more transmission resources in a transmission resource list, or includes one or more transmission resources composed of independent or combined carriers in the carrier list.

It should be noted that a random access procedure may include a 4-step RACH procedure or a 2-step RACH procedure.

For the 4-step RACH procedure, that is, a random access procedure of Type-1, the 4-step RACH procedure includes the following transmission process:

transmitting (by uplink) a random access sequence of Msg1;
transmitting (by downlink) a PDCCH/PDSCH corresponding to a random access response (RAR);
transmitting (by uplink) a physical uplink shared channel (PUSCH) scheduled by the RAR; and
transmitting (by downlink) a conflict resolved PDSCH.

In addition, for the 2-step RACH procedure, it includes uplink MsgA transmission and downlink MsgB transmission.

In this case, selecting the target transmission resource from the transmission resources for the random access related data transmission may include: performing a corresponding uplink transmission on an uplink carrier corresponding to the target transmission resource, and performing a corresponding downlink transmission on a corresponding downlink carrier.

In this embodiment, even if the terminal device is in an idle state, according to the first indication information and the second indication information of the network side device, the terminal device can select the target transmission resource from multiple transmission resources, or select one or more carriers constituting the target transmission resource from multiple carriers, so as to implement the random access related data transmission by using the target transmission resource.

The first indication information, the second indication information, the transmission resource list, the carrier list, and the like have same meanings as the first indication information, the second indication information, the transmission resource list, the carrier list, and the like described in the embodiment of the resource indication method shown in FIG. 1. A specific process that according to indications of the network side device, the terminal device selects the target transmission resource from multiple transmission resources, or selects one or more carriers that constitute the target transmission resource from multiple carriers corresponds to the specific process as to how the network side device instructs the terminal device to select the target transmission resource from multiple transmission resources, or to select one or more carriers that constitute the target transmission resource from multiple carriers described in the embodiment of the resource indication method as shown in FIG. 1, which is no longer described here.

According to the data transmission method provided in the embodiments of the present disclosure, even the terminal device is in an idle state, the terminal device can select one or more carriers from multiple carriers, so as to initiate the random access on the selected one or more carriers, which has a same beneficial effect as the method embodiment shown in FIG. 1, and details are not described herein again.

Optionally, in a case that the first indication information is used to indicate the carrier list, the first carrier and a second carrier constitute the transmission resource by default. The second carrier is, in the carrier list, a carrier with a lowest frequency among one or more carriers each having a frequency higher than or equal to a frequency of the first carrier and having the capability of the downlink transmission.

Optionally, the selection criteria corresponding to different transmission resources are different, or selection criteria corresponding to at least two transmission resources are the same.

The above-mentioned selection criteria have the same meaning and function as the selection criteria in the method embodiment shown in FIG. 1, and details are not described herein.

Further, under the condition that the selection criteria corresponding to the at least two transmission resources are the same, different priorities are configured for the transmission resources corresponding to the same selection criterion.

Further, the priority is related to a service type.

Optionally, the data transmission method further includes:
receiving third indication information, in which the third indication information is used to indicate a correspondence between SSB indexes of carriers in the transmission resource list.

The third indication information has the same meaning as the third indication information in the method embodiment shown in FIG. 1, and details are not described herein.

In an actual application, the terminal device may reduce measurement during carrier selection based on the correspondence between the SSB indexes of the carriers in the transmission resource list.

In an optional implementation, selecting a target transmission resource from the one or more transmission resources based on the signal quality threshold for the random access related data transmission includes:
in a case that a second carrier selected by the terminal for the random access is different from the first carrier receiving a system message, determining an SSB index of the second carrier corresponding to an SSB index of the first carrier based on the SSB index selected on the first carrier and the correspondence between the SSB indexes of the first carrier and the second carrier, and performing the random access based on a random access resource determined according to the SSB index of the second carrier.

The first carrier receiving the system message may be represented as the anchor carrier, while the second carrier is different from the first carrier receiving the system message, the second carrier may be represented as the non-anchor carrier. In this case, in a case that the terminal device selects the non-anchor carrier for the random access, selecting the target transmission resource from the one or more transmission resources according to the signal quality threshold for the random access related data transmission specifically includes: performing the random access related data transmission on a first target resource, in which the first target resource is a resource corresponding to a target beam of the non-anchor carrier in the target transmission resource, and the target beam is a strongest beam in beams of the non-anchor carrier corresponding to the strongest beam of the anchor carrier.

The embodiment corresponds to the method embodiment in which the correspondence between the SSB indexes of the anchor carrier and the non-anchor carrier is indicated via the third indication information shown in FIG. 1, and can achieves the same beneficial effect, details are not described herein again.

Optionally, the data transmission method further includes:
receiving fourth indication information, in which the fourth indication information is used to indicate cell ID information of a carrier in the transmission resource list or the carrier list.

The embodiment corresponds to the method embodiment in which physical cell ID of the non-anchor carrier is indicated via the fourth indication information shown in FIG. 1, and can achieves the same beneficial effect, details are not described herein again.

In a specific implementation, the terminal device may determine which carriers are co-sited carriers according to the cell ID information.

In this way, the fourth indication information may be specifically used to indicate a cell ID corresponding to a carrier co-sited with the carrier receiving the system message or sharing the system message with the carrier receiving the system message.

In an application, the terminal device may select the carrier co-sited or sharing the system message with the carrier receiving the system message to perform the random access related data transmission. For example, when the terminal device selects a non-anchor carrier to initiate access, selecting the target transmission resource from the one or more transmission resources according to the signal quality threshold for the random access related data transmission specifically includes: performing the random access related data transmission on a second target resource. The second target resource is the non-anchor carrier which is in the target transmission resource and co-sited with the anchor carrier.

In embodiments of the present disclosure, the terminal device receives first indication information, the first indication information is used to indicate a transmission resource list or a carrier list. Each transmission resource in the transmission resource list is a single carrier having a capability of an uplink transmission and a capability of a downlink transmission, or is a carrier combination consisting of a carrier having the capability of the uplink transmission and a carrier having the capability of the downlink transmission; and one carrier in the carrier list constitutes the transmission resource independently or more than one carrier in the carrier list constitutes the transmission resource. The terminal device receives second indication information, the second indication information is used to indicate a signal quality threshold corresponding to the transmission resource in the transmission resource list, or the second indication information is used to indicate a signal quality threshold corresponding to a first carrier having the capability of the uplink transmission in the carrier list. The terminal device selects a target transmission resource for a random access related data transmission from one or more transmission resources according to the signal quality threshold. In this way, when the terminal device in an idle state, the terminal device can select the target transmission resource from the transmission resources indicated by the first indication information according to the signal quality threshold indicated by the second indication information, or select one or more carriers forming the target transmission resource from the carriers indicated by the first indication information, so that the terminal device can perform selection in multiple carriers when initiating random access, so as to improve coverage of the random access.

Referring to FIG. 5, a block diagram of a network side device according to an embodiment of the present disclosure is shown. As shown in FIG. 5, the network side device 500 includes: a first sending module 501 and a second sending module 502.

The first sending module 501 is configured to send first indication information, in which the first indication information is used to indicate a transmission resource list or a carrier list, each of one or more transmission resources in the transmission resource list is a single carrier having an uplink-downlink transmission capability, or is a carrier combination consisting of a carrier having the capability of the uplink transmission and a carrier having the capability of the downlink transmission; and one carrier in the carrier list constitutes a transmission resource independently or more than one carrier in the carrier list constitutes a transmission resource.

The second sending module 502 is configured to send second indication information, in which the second indication information is used to indicate a signal quality threshold corresponding to the transmission resource in the transmission resource list, or the second indication information is used to indicate a signal quality threshold corresponding to a first carrier having the capability of the uplink transmission in the carrier list.

Optionally, in a case that the first indication information is used to indicate the carrier list, the first carrier and a second carrier constitute the transmission resource by default. The second carrier is, in the carrier list, a carrier with a lowest frequency among one or more carriers each having a frequency higher than or equal to a frequency of the first carrier and having the capability of the downlink transmission.

Optionally, selection criteria corresponding to different transmission resources are different, or selection criteria corresponding to at least two transmission resources are same.

Optionally, under a condition that the selection criteria corresponding to the at least two transmission resources are the same, different priorities are configured for the transmission resources corresponding to the same selection criterion.

Optionally, the priority is related to a service type.

Optionally, the network side device 500 further includes a configuration module.

The configuration module is configured to configure one or more carriers in the transmission resource list or the carrier list. The uplink-downlink transmission capabilities of the one or more carriers are determined by the configuring.

Optionally, the configuring includes at least one of the following operations:

configuring a period of a frame structure;
configuring an allocation of an uplink transmission slot of the carrier; or
configuring an allocation of a downlink transmission slot of the carrier.

Optionally, the network side device 500 further includes a third sending module.

The third sending module is configured to send third indication information, in which the third indication information is used to indicate a correspondence between SSB indexes of carriers in the transmission resource list.

Optionally, the network side device 500 further includes a fourth sending module.

The fourth sending module is configured to send fourth indication information, in which the fourth indication information is used to indicate cell ID information of a carrier in the transmission resource list or the carrier list.

The network side device 500 provided in the embodiment of the present disclosure can be the network side device to which the resource indication method shown in FIG. 1 is applied, and the network side device 500 can achieve the same beneficial effect as the implementation of the method shown in FIG. 1, which will be not elaborated herein.

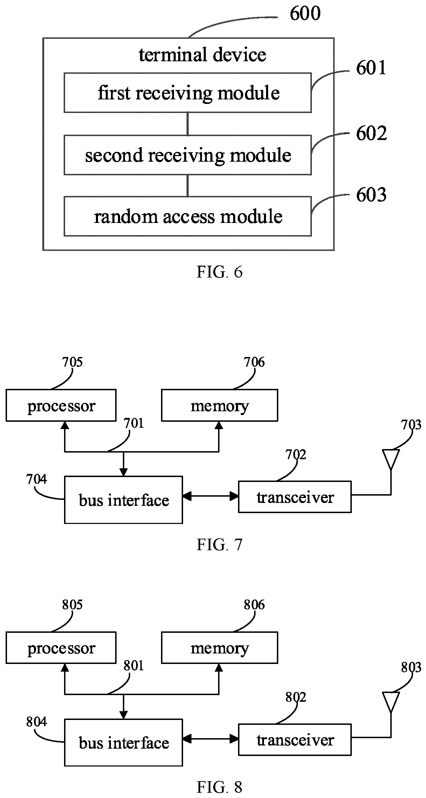

Referring to FIG. 6, a block diagram of a terminal device according to an embodiment of the present disclosure is shown. As shown in FIG. 6, the terminal device 600 includes: a first receiving module 601, a second receiving module 602, and a random access module 603.

The first receiving module 601 is configured to receive first indication information, in which the first indication information is used to indicate a transmission resource list or a carrier list, each of one or more transmission resource in the transmission resource list is a single carrier having a capability of an uplink transmission and a capability of a downlink transmission, or is a carrier combination consisting of a carrier having the capability of the uplink transmission and a carrier having the capability of the downlink transmission; and one carrier in the carrier list constitutes a transmission resource independently or more than one carrier in the carrier list constitutes a transmission resource.

The second receiving module 602 is configured to receive second indication information, in which the second indication information is used to indicate a signal quality threshold corresponding to the transmission resource in the transmission resource list, or the second indication information is used to indicate a signal quality threshold corresponding to a first carrier having the capability of the uplink transmission in the carrier list.

The random access module 603 is configured to select a target transmission resource from one or more transmission resources according to the signal quality threshold, for a random access related data transmission.

Optionally, in a case that the first indication information is used to indicate the carrier list, the first carrier and a second carrier constitute the transmission resource by default. The second carrier is, in the carrier list, a carrier with a lowest frequency among one or more carriers each having a frequency higher than or equal to a frequency of the first carrier and having the capability of the downlink transmission.

Optionally, selection criteria corresponding to different transmission resources are different, or selection criteria corresponding to at least two transmission resources are same.

Further, under the condition that the selection criteria corresponding to the at least two transmission resources are the same, different priorities are configured for the transmission resources corresponding to the same selection criteria.

Further, the priority is related to a service type.

Optionally, the terminal device 600 further includes a third receiving module.

The third receiving module is configured to receive third indication information, in which the third indication information is used to indicate a correspondence between SSB indexes of carriers in the transmission resource list.

Optionally, the random access module 603 is configured to:
in a case that a second carrier selected by the terminal for random access is different from the first carrier receiving a system message, determining an SSB index of the second carrier corresponding to an SSB index of the first carrier based on the SSB index selected on the first carrier and the correspondence between the SSB indexes of the first carrier and the second carrier, and performing the random access based on a random access resource determined according to the SSB index of the second carrier.

Optionally, the terminal device 600 further includes a fourth receiving module.

The fourth receiving module is configured to receive fourth indication information, in which the fourth indication information is used to indicate cell ID information of a carrier in the transmission resource list or the carrier list.

Optionally, indicating cell ID information of the carrier in the transmission resource list or the carrier list includes: indicating a cell ID corresponding to a carrier co-sited or sharing a system message with a carrier receiving the system message.

The terminal device 600 provided in the embodiment of the present disclosure can be the terminal device to which the data transmission method shown in FIG. 4 is applied, and the terminal device 600 can achieve the same beneficial effect as the method shown in FIG. 4, which will be not elaborated herein.

Referring to FIG. 7, FIG. 7 is another block diagram of a network side device according to an embodiment of the present disclosure. As illustrated in FIG. 7, the network side device includes a bus 701, a transceiver 702, an antenna 703, a bus interface 704, a processor 705, and a memory 706.

The transceiver 702 is configured to send first indication information. The first indication information is used to indicate a transmission resource list or a carrier list, each of one or more transmission resources in the transmission resource list is a single carrier having a capability of an uplink transmission and a capability of a downlink transmission , or is a carrier combination consisting of a carrier having the capability of the uplink transmission and a carrier having the capability of the downlink transmission; and one carrier in the carrier list constitutes a transmission resource independently or more than one carrier in the carrier list constitutes a transmission resource.

The transceiver 702 is further configured to send second indication information. The second indication information is used to indicate a signal quality threshold corresponding to the transmission resource in the transmission resource list, or the second indication information is used to indicate a signal quality threshold corresponding to a first carrier having the capability of the uplink transmission in the carrier list.

In the implementation, the network side device can realize the various processes realized by the network side device in the method embodiment shown in FIG. 1, and can achieve the same beneficial effect. In order to avoid repetition, it is not repeated here.

In FIG. 7, a bus architecture (represented by bus 701) is illustrated, the bus 701 may include any number of interconnected buses and bridges, the bus 701 links together various circuits including one or more processors represented by the processor 705 and memory represented by the memory 706. The bus 701 may also link together various other circuits, such as a peripheral device, a voltage regulator, and a power management circuit, etc., which are well known in the art, and therefore are not further described herein. The bus interface 704 provides an interface between the bus 701 and the transceiver 702. The transceiver 702 may be an element, or may be a plurality of elements, such as a plurality of receivers and transmitters, and provide units for communicating with various other devices on a transmission medium. The data processed by the processor 705 is transmitted on the wireless medium via the antenna 703. Further, the antenna 703 further receives data and transmits data to the processor 705.

The processor 705 is responsible for managing the bus 701 and general processing, and may also provide various functions including timing, peripheral interface, voltage regulation, power management, and other control functions. The memory 706 may be configured to store data used by the processor 705 when performing operations.

Optionally, the processor 705 may be a central processing unit (CPU), an application specific integrated circuit (ASIC), a field programmable gate array (FPGA), or a complex programmable logic device (CPLD).

Preferably, in the embodiment of the present disclosure, a network side device is provided, including the processor 705, the memory 706, in which a computer program executable on the processor 705 is stored on the memory 706, and when computer program is executed on the processor 705, each process of the resource indication method illustrated in FIG. 1 is implemented, and the same technical effect can be achieved. In order to avoid repetition, details are not described herein again.

Referring to FIG. 8, FIG. 8 is another block diagram of a terminal device according to an embodiment of the present disclosure. As illustrated in FIG. 8, a first user device includes a bus 801, a transceiver 802, an antenna 803, a bus interface 804, a processor 805, and a memory 806.

The transceiver 802 is configured to receive first indication information. The first indication information is used to indicate a transmission resource list or a carrier list, each of one or more transmission resources in the transmission resource list is a single carrier having a capability of an uplink transmission and a capability of a downlink transmission, or is a carrier combination consisting of a carrier having the capability of the uplink transmission and a carrier having the capability of the downlink transmission; and one carrier in the carrier list constitutes a transmission resource independently or more than one carrier in the carrier list constitutes a transmission resource.

The transceiver 802 is further configured to receive second indication information. The second indication information is used to indicate a signal quality threshold corresponding to the transmission resource in the transmission resource list, or the second indication information is used to indicate a signal quality threshold corresponding to a first carrier having the capability of the uplink transmission in the carrier list.

The processor 805 is configured to select a target transmission resource from one or more transmission resources according to the signal quality threshold, for a random access related data transmission.

Optionally, in a case that the first indication information is used to indicate the carrier list, the first carrier and a second carrier constitute the transmission resource by default. The second carrier is, in the carrier list, a carrier with a lowest frequency among one or more carriers each having a frequency higher than or equal to a frequency of the first carrier and having the capability of the downlink transmission.

Optionally, selection criteria corresponding to different transmission resources are different, or selection criteria corresponding to at least two transmission resources are the same.

Further, under a condition that the selection criteria corresponding to the at least two transmission resources are the same, different priorities are configured for the transmission resources corresponding to the same selection criterion.

Further, the priority is related to a service type.

Optionally, the transceiver 802 is further configured to receive third indication information. The third indication information is used to indicate a correspondence between SSB indexes of carriers in the transmission resource list.

Further, the step of selecting the target transmission resource from the one or more transmission resources according to the signal quality threshold for the random access related data transmission executed by the processor 805 includes:

in a case that a second carrier selected by the terminal for random access is different from the first carrier receiving a system message, determining an SSB index of the second carrier corresponding to an SSB index of the first carrier based on the SSB index selected on the first carrier and the correspondence between the SSB indexes of the first carrier and the second carrier, and controlling the transceiver 802 to perform the random access based on a random access resource determined according to the SSB index of the second carrier.

Optionally, the transceiver 802 is further configured to receive fourth indication information, in which the fourth indication information is used to indicate cell ID information of a carrier in the transmission resource list or the carrier list.

Further indicating cell ID information of the carrier in the transmission resource list or the carrier list includes:

indicating a cell ID corresponding to a carrier co-sited or sharing a system message with the carrier receiving the system message.

In the implementation, the terminal device can realize various processes realized by the terminal device in the method embodiment shown in FIG. 4, and can achieve the same beneficial effect. In order to avoid repetition, it is not repeated here.

In FIG. 8, a bus architecture (represented by bus 801) is illustrated, the bus 801 may include any number of interconnected buses and bridges, the bus 801 links together various circuits including one or more processors represented by the processor 805 and memory represented by the memory 806. The bus 801 may also link together various other circuits, such as a peripheral device, a voltage regulator, and a power management circuit, etc., which are well known in the art, and therefore are not further described herein. The bus interface 804 provides an interface between the bus 801 and the transceiver 802. The transceiver 802 may be an element, or may be a plurality of elements, such as a plurality of receivers and transmitters, and provide units for communicating with various other devices on a transmission medium. The data processed by the processor 805 is transmitted on the wireless medium via the antenna 803. Further, the antenna 803 further receives data and transmits data to the processor 805.

The processor 805 is responsible for managing the bus 801 and general processing, and may also provide various functions including timing, peripheral interface, voltage regulation, power management, and other control functions. The memory 606 may be configured to store data used by the processor 805 when performing operations.

Optionally, the processor 805 may be a central processing unit (CPU), an application specific integrated circuit (ASIC), a field-programmable gate array (FPGA), or a complex programmable logic device (CPLD).

Preferably, the embodiments of the present disclosure further provide a first user equipment, including the processor 805, the memory 806, in which a computer program executable on the processor 805 is stored on the memory 806, and when computer program is executed on the processor 805, each process of the data transmission method illustrated in FIG. 4 is implemented, and the same technical effect can be achieved. In order to avoid repetition, details are not described herein again.

The embodiments of the present disclosure further provide a computer readable storage medium, in which a computer program is stored on the computer readable storage medium, and when the computer program is executed by the processor, each process of the resource indication method illustrated in FIG. 1 is implemented, or each process of the data transmission method illustrated in FIG. 4 is implemented, and the same technical effect can be achieved. In order to avoid repetition, details are not described herein again.

The computer readable storage medium, such as a read-only memory (ROM), a random access memory (RAM), a magnetic disk, or an optical disc, etc.

It should be noted that, in the present disclosure, the terms "comprise", "comprising" or any other variations thereof, are intended to cover a non-exclusive inclusion, such that a process, a method, an article or an apparatus including a series of elements not only includes those elements but also includes other elements not expressly listed, or may further include elements inherent to such process, method, article, or apparatus. In the absence of more constraints, the elements defined by a sentence "comprising one" do not preclude the presence of additional same elements in the process, method, article, or apparatus that includes the elements.

Through the description of the above embodiments, those skilled in the art may clearly understand that the method described above may be implemented by means of software plus a necessary general hardware platform, and certainly may also be implemented by hardware, but in many cases, the former is a better implementation. On the basis of such an understanding, the technical solution of the present disclosure essentially or partly contributing to the related art may be embodied in the form of a software product, which is stored in a storage medium (such as a ROM/RAM, a magnetic disk, and an optical disc), and includes several instructions for enabling a terminal (which may be a mobile phone, a computer, a server, an air conditioner, or a network device, etc.) to perform the method of the embodiments of the present disclosure.

The embodiments of the present disclosure are described above with reference to the accompanying drawings, but the present disclosure is not limited to the specific embodiments described above, and the specific embodiments described above are merely illustrative rather than limiting. Those skill in the art can also make many forms without departing from the spirit of the present disclosure and the scope of protection of the claims, which are all within the protection of the present disclosure.

**Claims**

1.  A resource indication method, applied to a network side device, comprising:

    sending first indication information, wherein the first indication information is used to indicate a transmission resource list or a carrier list, each of one or more transmission resources in the transmission resource list is a single carrier having a capability of an uplink transmission and a downlink transmission, or is a carrier combination consisting of a carrier having the capability of an uplink transmission and a carrier having the capability of a downlink transmission; and one carrier in the carrier list constitutes a transmission resource independently or more than one carrier in the carrier list constitute a transmission resource; and
    sending second indication information, wherein the second indication information is used to indicate a signal quality threshold corresponding to the transmission resource in the transmission resource list, or the second indication information is used to indicate a signal quality threshold corresponding to a first carrier having the capability of the uplink transmission in the carrier list.

2.  The method of claim 1, wherein the resource indication method is used in a random access procedure.

3.  The method of claim 1, wherein, in a case that the first indication information is used to indicate the carrier list, the first carrier and a second carrier constitute the transmission resource by default, wherein the second carrier is, in the carrier list, a carrier with a lowest frequency among one or more carriers each having a frequency higher than or equal to a frequency of the first carrier and having the capability of the downlink transmission.

4.  The method of any of claims 1 to 3, wherein selection criteria corresponding to different transmission resources are different, or selection criteria corresponding to at least two transmission resources are same.

5.  The method of claim 4, wherein in a case that the selection criteria corresponding to the at least two transmission resources are the same, different priorities are configured for the transmission resources corresponding to the same selection criteria.

6.  The method of claim 5, wherein the priority is related to a service type.

7.  The method of claim 1, before sending the first indication information, further comprising:
    configuring one or more carriers in the transmission resource list or the carrier list, wherein the capability of the uplink transmission and/or the capability of the downlink transmission of each carrier is determined by the configuring.

8.  The method of claim 7, wherein the configuring comprises at one of:

    configuring a period of a frame structure;
    configuring an allocation of an uplink transmission slot of the carrier; or
    configuring an allocation of a downlink transmission slot of the carrier.

9.  The method of claim 1, further comprising:
    sending third indication information, wherein the third indication information is used to indicate a correspondence between synchronization signal/physical broadcast channel signal block (SSB) indexes of carriers in the transmission resource list.

10. The method of claim 1, further comprising:
sending fourth indication information, wherein the fourth indication information is used to indicate cell identity (ID) information of a carrier in the transmission resource list or the carrier list.

11. A data transmission method, applied to a terminal device, comprising:

receiving first indication information, wherein the first indication information is used to indicate a transmission resource list or a carrier list, each of one or more transmission resources in the transmission resource list is a single carrier having a capability of an uplink transmission and a capability of a downlink transmission, or is a carrier combination consisting of a carrier having the capability of the uplink transmission and a carrier having the capability of the downlink transmission; and one carrier in the carrier list constitutes a transmission resource independently or more than one carrier in the carrier list constitutes a transmission resource;
receiving second indication information, wherein the second indication information is used to indicate a signal quality threshold corresponding to the transmission resource in the transmission resource list, or the second indication information is used to indicate a signal quality threshold corresponding to a first carrier having the capability of the uplink transmission in the carrier list; and
selecting a target transmission resource from one or more transmission resources based on the signal quality threshold, for a random access related data transmission.

12. The method of claim 11, wherein, in a case that the first indication information is used to indicate the carrier list, the first carrier and a second carrier constitute the transmission resource by default, the second carrier is, in the carrier list, a carrier with a lowest frequency among one or more carriers each having a frequency higher than or equal to a frequency of the first carrier and having the capability of the downlink transmission.

13. The method of claim 11 or 12, wherein selection criteria corresponding to different transmission resources are different, or selection criteria corresponding to at least two transmission resources are same.

14. The method of claim 13, wherein in a case that the selection criteria corresponding to the at least two transmission resources are the same, different priorities are configured for the transmission resources corresponding to the same selection criteria.

15. The method of claim 14, wherein the priority is related to a service type.

16. The method of claim 11, further comprising:
receiving third indication information, wherein the third indication information is used to indicate a correspondence between synchronization signal/physical broadcast channel signal block (SSB) indexes of carriers in the transmission resource list.

17. The method of claim 16, selecting the target transmission resource from the one or more transmission resources based on the signal quality threshold for the random access related data transmission comprises:
in a case that a second carrier selected by the terminal for random access is different from the first carrier receiving a system message, determining an SSB index of the second carrier corresponding to an SSB index of the first carrier based on the SSB index selected on the first carrier and the correspondence between the SSB indexes of the first carrier and the second carrier, and performing the random access based on a random access resource determined according to the SSB index of the second carrier.

18. The method of claim 11, further comprising:
receiving fourth indication information, the fourth indication information indicating cell identity (ID) information of a carrier in the transmission resource list or the carrier list.

19. The method of claim 18, wherein indicating the cell ID information of the carrier in the transmission resource list or the carrier list comprises:
indicating a cell ID corresponding to a carrier co-sited or sharing a system message with a carrier receiving the system message.

20. A network side device, comprising:

a first sending module, configured to send first indication information, wherein the first indication information is used to indicate a transmission resource list or a carrier list, each of one or more transmission resources in the transmission resource list is a single carrier having a capability of an uplink transmission and a capability of a downlink transmission, or is a carrier combination consisting of a carrier having the capability of the uplink transmission and a carrier having the capability of the downlink transmission; and one carrier in the carrier list constitutes a transmission resource independently or more than one carrier in the carrier list constitutes a transmission resource; and

a second sending module, configured to send second indication information, wherein the second indication information is used to indicate a signal quality threshold corresponding to the transmission resource in the transmission resource list, or the second indication information is used to indicate a signal quality threshold corresponding to a first carrier having the capability of the uplink transmission in the carrier list.

21. A terminal device, comprising:

a first receiving module, configured to receive first indication information, wherein the first indication information is used to indicate a transmission resource list or a carrier list, each of one or more transmission resources in the transmission resource list is a single carrier having a capability of an uplink transmission and a capability of a downlink transmission, or is a carrier combination consisting of a carrier having the capability of the uplink transmission and a carrier having the capability of the downlink transmission; and one carrier in the carrier list constitutes a transmission resource independently or more than one carrier in the carrier list constitutes a transmission resource;

a second receiving module, configured to receive second indication information, wherein the second indication information is used to indicate a signal quality threshold corresponding to the transmission resource in the transmission resource list, or the second indication information is used to indicate a signal quality threshold corresponding to a first carrier having the capability of the uplink transmission in the carrier list; and

a random access module, configured to select a target transmission resource from one or more transmission resources based on the signal quality threshold, for a random access related data transmission.

22. A network side device, comprising: a processor and a transceiver; wherein,

the transceiver is configured to send first indication information, wherein the first indication information is used to indicate a transmission resource list or a carrier list, each of one or more transmission resources in the transmission resource list is a single carrier having a capability of an uplink transmission and a capability of a downlink transmission, or is a carrier combination consisting of a carrier having the capability of the uplink transmission and a carrier having the capability of the downlink transmission; and one carrier in the carrier list constitutes a transmission resource independently or more than one carrier in the carrier list constitutes a transmission resource; and

the transceiver is further configured to send second indication information, wherein the second indication information is used to indicate a signal quality threshold corresponding to the transmission resource in the transmission resource list, or the second indication information is used to indicate a signal quality threshold corresponding to a first carrier having the capability of the uplink transmission in the carrier list.

23. A terminal device, comprising: a processor and a transceiver; wherein,

the transceiver is configured to receive first indication information, wherein the first indication information is used to indicate a transmission resource list or a carrier list, each of one or more transmission resources in the transmission resource list is a single carrier having a capability of an uplink transmission and a capability of a downlink transmission, or is a carrier combination consisting of a carrier having the capability of the uplink transmission and a carrier having the capability of the downlink transmission; and one carrier in the carrier list constitutes a transmission resource independently or more than one carrier in the carrier list constitutes a transmission resource;

the transceiver is further configured to receive second indication information, wherein the second indication information is used to indicate a signal quality threshold corresponding to the transmission resource in the transmission resource list, or the second indication information is used to indicate a signal quality threshold corresponding to a first carrier having the capability of the uplink transmission in the carrier list; and

the processor is configured to select a target transmission resource from one or more transmission resources based on the signal quality threshold, for a random access related data transmission.

24. A network side device, comprising a processor, a memory, and a computer program stored on the memory and executable on the processor, wherein, when the computer program is executed by the processor, the steps of the resource indication method of any of claims 1 to 10 are implemented.

25. A terminal device, comprising a processor, a memory, and a computer program stored on the memory and executable on the processor, wherein, when the computer program is executed by the processor, the steps of the data transmission method of any of claims 11 to 19 are implemented.

26. A computer readable storage medium with a computer program stored thereon, wherein the computer program implements steps of the resource indication method of any of claims 1 to 10, or steps of the data transmission method of any of claims 11 to 19, when executed by a processor.

```
        ┌──────────────────┐
        │      START       │
        └──────────────────┘
                 │
                 ▼
┌─────────────────────────────────────────┐   101
│     sending first indication information  │
└─────────────────────────────────────────┘
                 │
                 ▼
┌─────────────────────────────────────────┐   102
│    sending second indication information  │
└─────────────────────────────────────────┘
                 │
                 ▼
        ┌──────────────────┐
        │       END        │
        └──────────────────┘
```

FIG. 1

RSRP1 — 4.9

4.9+2.3

RSRP2 — 

2.6

RSRP3 — 

2.6+1.8

FIG. 2a

RSRP1

4. 9

4. 9+2. 3

RSRP2

2. 6    2. 6+1. 8

FIG. 2b

co-sited
2.6 GHz

700 MHz

non-co-sited
2.6 GHz

non-co-sited
2.6 GHz

FIG. 3

FIG. 4

FIG. 5

600

terminal device

601

first receiving module

602

second receiving module

603

random access module

FIG. 6

705

processor

706

memory

701

703

704

bus interface

702

transceiver

FIG. 7

805

processor

806

memory

801

803

804

bus interface

802

transceiver

FIG. 8

## INTERNATIONAL SEARCH REPORT

| | International application No. |
|---|---|
| | **PCT/CN2022/098078** |

| A. | CLASSIFICATION OF SUBJECT MATTER |
|---|---|
| | H04W 72/00(2009.01)i; H04W 72/02(2009.01)i; H04W 74/00(2009.01)i |

According to International Patent Classification (IPC) or to both national classification and IPC

| B. | FIELDS SEARCHED |
|---|---|

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNTXT; ENTXTC; CNKI; VEN; USTXT; EPTXT; WOTXT: 传输资源, 载波, 门限, 增补上行, 补充上行, 指示, 优先级, SUL, supplement+, carrier, RSRP, SSB, priority

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 110049557 A (HUAWEI TECHNOLOGIES CO., LTD.) 23 July 2019 (2019-07-23) description, paragraphs [0005]-[0120] | 1-26 |
| X | WO 2021097698 A1 (GUANGDONG OPPO MOBILE TELECOMMUNICATIONS CORP., LTD.) 27 May 2021 (2021-05-27) description, page 5, line 1-page 7, line 14 | 1-26 |
| A | CN 107734687 A (ZTE CORP.) 23 February 2018 (2018-02-23) description, entire document | 1-26 |
| A | US 2018376510 A1 (QUALCOMM INC.) 27 December 2018 (2018-12-27) description, entire document | 1-26 |
| A | US 2020084805 A1 (TELEFONAKTIEBOLAGET LM ERICSSON (PUBL)) 12 March 2020 (2020-03-12) description, entire document | 1-26 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 August 2022** | **31 August 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/098078**

| Patent document cited in search report | | | Publication date (day/month/year) | Patent family member(s) | | | Publication date (day/month/year) |
|---|---|---|---|---|---|---|---|
| CN | 110049557 | A | 23 July 2019 | US | 2020351950 | A1 | 05 November 2020 |
| | | | | EP | 3723432 | A1 | 14 October 2020 |
| | | | | WO | 2019141101 | A1 | 25 July 2019 |
| WO | 2021097698 | A1 | 27 May 2021 | | None | | |
| CN | 107734687 | A | 23 February 2018 | EP | 3525535 | A1 | 14 August 2019 |
| | | | | US | 2022201652 | A1 | 23 June 2022 |
| | | | | JP | 2019528020 | A | 03 October 2019 |
| | | | | US | 2019349889 | A1 | 14 November 2019 |
| | | | | KR | 20190049730 | A | 09 May 2019 |
| US | 2018376510 | A1 | 27 December 2018 | US | 2020329510 | A1 | 15 October 2020 |
| | | | | JP | 2020524942 | A | 20 August 2020 |
| | | | | WO | 2018237133 | A1 | 27 December 2018 |
| | | | | TW | 201906480 | A | 01 February 2019 |
| | | | | JP | 2021106404 | A | 26 July 2021 |
| | | | | KR | 20210012050 | A | 02 February 2021 |
| | | | | BR | 112019026758 | A2 | 30 June 2020 |
| | | | | SG | 11201910396V | A | 30 January 2020 |
| | | | | CN | 112804764 | A | 14 May 2021 |
| | | | | KR | 20200018462 | A | 19 February 2020 |
| | | | | EP | 3643132 | A1 | 29 April 2020 |
| | | | | CN | 110832939 | A | 21 February 2020 |
| | | | | TW | 202119860 | A | 16 May 2021 |
| US | 2020084805 | A1 | 12 March 2020 | WO | 2019047781 | A1 | 14 March 2019 |
| | | | | CN | 109757132 | A | 14 May 2019 |
| | | | | EP | 3695670 | A1 | 19 August 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110653349